# EUROPEAN PATENT APPLICATION

(11) **EP 0 935 356 A2**
(43) Date of publication of application: **11.08.1999**
(21) Application number: 99300933.1
(22) Date of filing: 09.02.1999
(51) Int. Cl.: H04B 10/08, H04B 10/17

(54) **System for monitoring a digital bidirectional optical communication line**

(30) Priority: 09.02.1998 JP 2712798
(71) Applicant: NEC CORPORATION, Tokyo (JP)
(72) Inventor: Nomura, Kenichi, c/o Nec Corporation, Tokyo (JP)
(74) Representative: Moir, Michael Christopher

(57) **Abstract**

A bi-directional system which reduces the number of wavelength for downward and upward signals and monitors any malfunction of repeaters accurately. The system of the present invention comprises end terminals for transmitting/receiving light signals, optical fibers for upward/downward transmission line which carry the light signal, and a plurality of optical repeaters which amplify directly the attenuated light signals. Here, each repeater comprises an optical amplifier for the transmission lines, an optical coupler for separating the output of the optical amplifier into two beams, and optical filter for extracting monitor wavelength to output it into the opposite direction. Any faulty repeater is detected by analyzing the amplitudes of the pulse train which returns back to an end terminal under the time delay depending upon the distance between the end terminal and each repeater.

## Description

The present invention relates to a monitoring system for a digital bi-directional transmission line and a loop circuit for monitoring a plurality of repeaters which uses optical fibers.

Recently, access systems for multi-media service or broad band integrated services digital network (B.ISDN) ) using optical fiber communication technology is of great interest. Actually, various services from telephone stations such as fiber to the home (FTTH) and fiber to the curb (FTTC) have been now available.

For the purposes such as communicating between two points using optical fibers, there is used a monitoring system for monitoring transmission lines using optical fibers including optical amplifier repeaters with optical loop circuit.

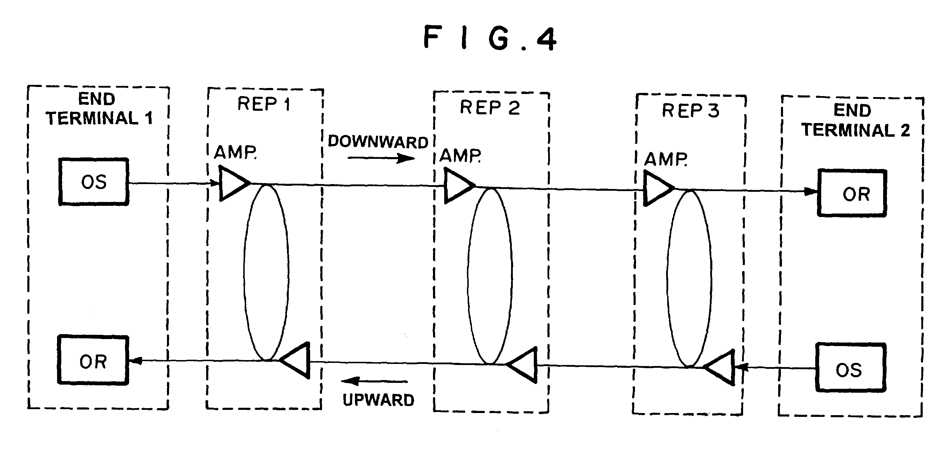

Referring to Figure 4, one of the conventional monitoring systems is explained, wherein a single wavelength is transmitted. Here, a low frequency monitoring signal is superimposed on a main signal by using amplitude modulation.

A light signal transmitted from OS in end terminal 1 is amplified by amplifiers (AMPs) in repeaters REP1,REP2 and REP3 toward OR in end terminal 2. Similarly, a light signal transmitted from OS in end terminal 2 is amplified by amplifiers (AMPs) in repeaters REP3, REP2 and REP1 toward OR in end terminal 1. Here, REP1, REP2, and REP3 comprises an upward amplifier, a down ward amplifier, and a loop circuit.

The down light signal transmitted from end terminal 1 is inputted into REP 1 and then inputted into the loop circuit through AMP. The loop circuit outputs most of the intensity of the signal to REP 2, while a part of the signal is branched back to the upward direction. The branched back signal is multiplexed with the upward signal which is amplified by AMP , and is transmitted toward end terminal 1. Similarly, in REP 2 and REP 3, the branched back signal is transmitted toward end terminal 1 together with the upward signal.

Therefore, the original upward signal and the branched back signals from REP 1, REP 2, and REP 3 are inputted into end terminal 1.This mixed signal is demodulated by OR to obtain monitor signals which are branched back by REP1, REP 2, and REP 3. These three monitor signals have delay time depending upon the distance between end terminal 1 and each REP. Each monitor signal is identified by the delay time to monitor a breakdown of a transmission line and a fall of a REP level.

In a wavelength multiplexing transmission system, the above-mentioned monitor signals may be carried on different wavelengths which are assigned to each channel, although it may as well be superimposed on the wavelength which carries a main signal.

Further, one of the conventional monitoring system as disclosed in JP (A) Hei 3-42927, 1991 is explained. This monitoring system is a digital bi-directional repeater transmission line which comprises, similarly in Figure 4, an end terminal for transmitting and receiving light signals, optical fibers for upward/ downward transmission line which carry the light signal, and a plurality of optical repeaters which amplify directly the attenuated light signals. Here, each repeater comprises an optical amplifier for each transmission line, and a filter which outputs a monitor signal extracted from the output of the optical amplifier by usng a wavelength different from and near to a wavelength which carries a main signal. The extracted monitor signal is fed into the input of an optical amplifier at the opposite side of the transmission line. The monitoring system disclosed in the above-mentioned prior art reference is characterized in that a malfunction of repeater is detected by analyzing the amplitudes of the pulse train which return back to an end terminal and is accompanied with a time delay depending upon the distance between the end terminal and each repeater, when a light pulse signal with a wavelength assigned for monitoring is transmitted into an optical fiber.

The monitoring system disclosed in the above-mentioned reference is further characterized in that a pepetion cycle of an optical pulse signal transmitted from an end terminal for monitoring is longer than the time which requires the optical pulse signal to go to the farthest repeater and to return back to the end terminal. A monitoring or a detection of malfunction of repeater is accomplished at all times by analyzing a pulse train received by the end terminal.

However, the conventional loop circuit returns back wavelengths multiplexed for main signals, as well as a monitoring wavelength.

Therefore, the main signals may interfere mutually, and the interference causes a degradation of the quality of the main signals, when the upward wavelength is equal to the downward wavelength. Therefore, in this case, it becomes necessary to transmit main signals sequentially.

Accordingly, in the conventional system, the interference was avoided by using different wavelengths for upward/downward directions. Therefore, a lot of optical sources with different wavelengths were required. Thus, the conventional system was inefficient in the wavelength multiplexing.

Therefore, an object of the present invention is to monitor reliably the malfunctions of repeaters or transmission lines by extracting sequentially a monitor wavelength from both ends of a transmission line, while both end terminals at the ends of the transmission line use the same wavelength for modulating each main signal.

A first aspect of the present invention provides a monitoring system for monitoring a digital bi-directional communication line, which comprises end terminals for transmitting and receiving pulsed light signals, optical fibers for carrying said light signals in opposite directions and a plurality of optical repeaters which amplify directly light signals carried by said optical fibers, each repeater comprising a pair of optical amplifiers, a pair of optical couplers for separating the output of the optical amplifiers into two beams, and a pair of optical filters for extracting a monitor signal and outputting the monitor signal in the opposite transmission direction to which it was received by the repeater; and
means for analyzing the amplitudes of the pulses received at an end terminal with a time delay depending upon a distance between the end terminal and a repeater in order to detect a malfunction in the communication line.

A preferred embodiment of this aspect of the present invention provides a system for monitoring a digital bi-directional repeater transmission line which comprises end terminals for transmitting and receiving light signals, optical fibers for upward/downward transmission line which carry the light signal, and a plurality of optical repeaters which amplify directly the attenuated light signals. Here, each repeater comprises a pair of optical amplifiers for downward/upward transmission lines, a pair of optical couplers for upward/downward directions for separating the output of the optical amplifier into two beams, and a pair of optical filters for upward/downward directions for extracting a monitor wavelength to output it into the opposite transmission line. The monitoring system of the present invention is characterised in that a faulty repeater is detected by analyzing the amplitudes of the pulse train which returns back to an end terminal under the time delay depending upon the distance between the end terminal and each repeater, when a light pulse signal with a wavelength assigned for monitoring is transmitted into an optical fiber.

Thus, there is provided an optical band pass filter which passes through only the wavelength for a monitor signal, which is involved in a return back route of a loop circuit in a repeater.

Further, each optical coupler may be a 2 x 2 arrayed wave-guide optical coupler. Furthermore, the intensity-modulated monitoring signals in a low frequency range for the downward and upward directions may be output at different times at each end terminal.

In a second aspect, the present invention provides a loop circuit comprising a first optical amplifier for amplifying a first signal, a first 2 x 2 optical coupler connected with the output of said first optical amplifier, a second optical amplifier for amplifying a second signal, a second 2 x 2 optical coupler connected with the output of said second optical amplifier, a first optical band pass filter (BPF) for extracting a first monitor signal from one of the outputs of the first 2 x 2 optical coupler, and a second optical BPF for extracting a second monitor signal from one of the outputs of said 2 x 2 optical coupler.

A preferred embodiment of this aspect of the present invention comprises an optical amplifier for the downward signal, a 2 x 2 optical coupler connected with the output of the optical amplifier for the downward signal, an optical amplifier for the upward signal, a 2 x 2 optical coupler connected with the output of the optical amplifier for the upward signal, a downward optical band pass filter (BPF) for extracting a downward monitor wavelength signal from one of the outputs of the downward 2 x 2 optical coupler, an upward optical BPF for extracting a upward monitor wavelength signal from one of the outputs of the upward 2 x 2 optical coupler. The downward monitor wavelength signal and the upward monitor wavelength signal are inputted into the loop circuit at a prescribed time interval.

In a third aspect, the present invention provides a loop circuit comprising a first 2 x 1 optical coupler for receiving a first signal, a first 1 x 2 optical coupler for receiving the first signal, a second 2 x 1 optical coupler for receiving a second signal, a second 1 x 2 optical coupler for receiving the second signal, a first optical band pass filter (BPF) for extracting the first monitor signal from one of the outputs of said first 1 x 2 optical coupler, a second optical (BPF) for extracting the second monitor signal from one of the outputs of the second 1 x 2 optical coupler, a first optical amplifier connected with the input of said first 2 x 1 optical coupler, and a second optical amplifier connected with the input of said second 2 x 1 optical coupler.

A preferred embodiment of this aspect of the present invention comprises a 2 x 1 downward optical coupler for the downward signal, an 1 x 2 downward optical coupler for the downward signal, a 2 x 1 upward optical coupler for the upward signal, a 1 x 2 upward optical coupler for the upward signal, a downward optical BPF for extracting a downward monitor wavelength signal from one of the outputs of 1 x 2 downward optical coupler, an upward optical BPF for extracting an upward monitor wavelength signal from one of the outputs of 1 x 2 upward optical coupler, an optical amplifier connected with the input of 2 x 1 downward optical coupler, and another optical amplifier connected with the input of 2 x 1 upward optical coupler. The downward monitor signal and the upward monitor signal are inputted into the loop circuit at a prescribed time interval.

In a preferred embodiment, the optical signal is a multiplexed signal by OS 1, OS 2 and OS-SV. The same signal is returned back from the loop circuit. However, the signal which is returned back from the downward direction to the upward direction, or from the upward direction to the downward direction is only a monitor signal of λSV, by virtue of the inserted optical band pass filter which passes through only the wavelength λSV.

Therefore, any interference between a main signal and a monitor signal can not occur. Accordingly, efficient and economical wavelength multiplexing system can be implemented, because the wavelength λ1 emitted from OS 1 and the wavelength λ2 emitted from OS2 can be common for both of the end terminals.

Further, the tuning of the wavelength is simplified although the wavelength management was not easy due to the necessity of preventing an interference between the downward signal and the upward signal in the conventional multiplexing system. Further, the selection of the wavelengths are optimized complying with the characteristics of the transmission line, because the wavelength can be chosen more freely than in the conventional system.

Preferred features of the present invention will now be described, purely by way of example only, with reference to the accompanying drawings, in which:-

Figure 1 is a block diagram of a monitoring system.

Figure 2 is a block diagram of a loop circuit which may be used in the monitoring system.

Figure 3 is a block diagram of another loop circuit may be used in the monitoring system.

Figure 4 is a block diagram of one of the conventional monitoring system.

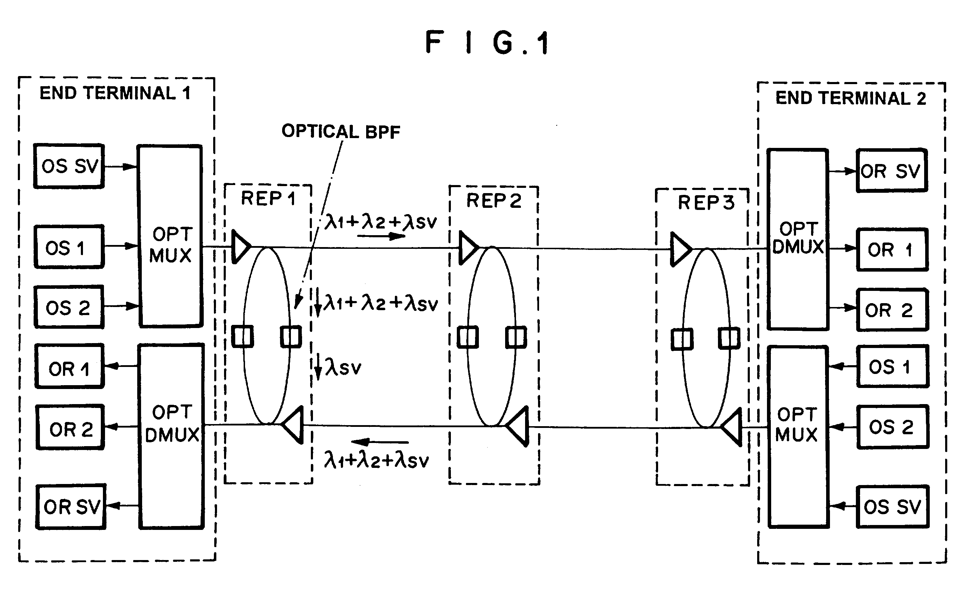

Referring to Figures 1 to 4, a monitoring system and a loop circuit thereof is explained. Figure 1 is a block diagram of an exemplary wavelength multiplexing transmission system wherein two main signals and one monitor signal are transmitted.

In Figure 1, end terminal 1 comprises transmission unit OS 1 which transmits a main signal wavelength λ 1, transmission unit OS 2 which transmits a main signal wavelength λ 2, transmission unit OS-SV which transmits a downward monitor signal wavelength λ SV, and multiplexer OPT-MUX which multiplexes the above wavelengths. The main signal wavelengths λ 1 and λ 2 are amplitude-modulated by transmission data, while the downward monitor signal wavelength λ SV is amplitude-modulated by a low frequency signal. Further, end terminal 1 comprises receiving unit OR 1 which receives a main signal wavelength λ 1, receiving unit OR 2 which receives a main signal wavelength λ 2, receiving unit OR-SV which receives an upward monitor signal wavelength λ SV, and demultiplexer OPT-DMUX which demultiplexes the wavelengths λ 1, λ 2, and λ SV. The same will apply to end terminal 2 at another end of the communication line.

Here, the downward and upward monitor signals are transmitted at a prescribed time interval to avoid a mutual inteference, because the wavelength is the same.

Further, each repeater of REP 1, REP2, and REP 3 which is located at a prescribed distance, comprises optical amplifiers AMPs for downward and upward, optical couplers for downward and upward, band pass filters (BPF) for downward and upward for extracting monitor wavelength λ SV. These AMPs are located in front of the loop circuit in order to reduce a coupling loss between optical fibers and the AMPs. The coupling loss becomes lower than that obtained by the AMPs located inside the loop circuit.

OS 1, OS 2, and OS-SV are light sources which emit different wavelengths. Light signals from OS 1, OS 2, and OS-SV are multiplexed by multiplexer OPT-MUX and are transmitted from an end terminal to the transmission line.

Similarly, OR 1, OR 2, and OR-SV are optical detectors for different wavelengths. Light signals from OR 1, OR 2, and OR-SV are demultiplexed by demultiplexer OPT-DMUX and are terminated at the optical detectors OR 1, OR 2, and OR-SV.

Each of REP1, REP 2, and REP 3 includes optical amplifiers for downward/ upward signals, and a loop circuit. The optical amplifier is, for example, an erbium doped optical fiber, wherein Er 3+ is doped into a core of an optical fiber and an induced emission in 1.5 µm range of inherent property of Er 3+ are utilized. A compact semiconductor optical amplifier with broader amplifying range may also be used. The loop circuit is connected with the output of the optical amplifier.

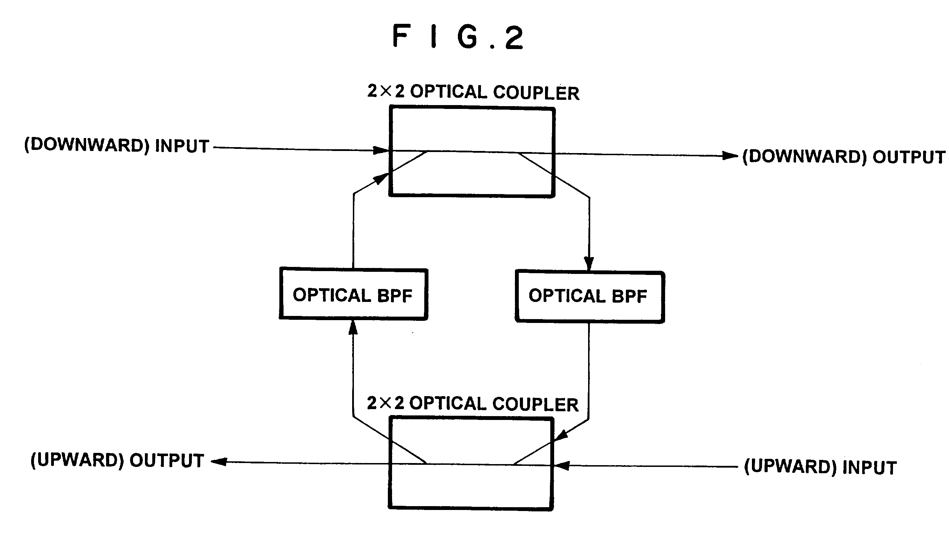

Figure 2 shows a first embodiment of a loop circuit which comprises two 2 x 2 optical couplers, and two optical BPFs.

The downward signal inputted into the downward 2×2 optical coupler is branched into to beams, one of which becomes a downward signal, and the other of which becomes a return back signal inputted into an optical BPF. The optical BPF transmits wavelength λ SV and inputs it into the upward 2 × 2 optical coupler. Therefore, a λ SV monitor signal and the upward signal are inputted into the upward 2×2 optical coupler. Then, the output of the upward 2 × 2 optical coupler is branched into two beams, one of which becomes an upward signal, and the other of which is a return back signal inputted into downward optical BPF. The downward optical BPF transmits wavelength λ SV and input it into the downward 2 × 2 optical coupler.

End terminal 1 transmits a main signal of wavelength λ 1 from unit OS 1, and another main signal of wavelength λ 2 from unit OS 2, and a monitor signal of wavelength λ SV. These three signals are multiplexed by OPT-MUX to be transmitted into the transmission line. The light sources OS 1,OS 2, and OS-SV may be continuously or discretely tunable lasers. For example, Tunable twin guide (TTG) laser is a continuously tunable laser. This is a distributed feed back laser (DFB), wherein the Bragg wavelength is determined by a diffraction grating and the refractive index of the medium and the refractive index is varied by injecting a current into tuning a waveguide which is adjacent to an active layer. The discretely tunable laser may be, for example, a laser with directional coupling filter, a Y type laser using Mach-Zehnder interferometer, or an SLG-DBR laser which has two distributed bragg reflectors (DBR) with super lattice diffraction grating (SLG). Further, these light sources may be modulated by other methods in addition to an intensity modulation.

OPT-MUX may be a Y multiplexer or an arrayed wave-guide multiplexer which joins three signal beams into a single beam to output to a single optical fiber as a transmission line.

The downward optical signal (λ1+λ2+λSV) is inputted into REP 1, amplified by AMP, and then inputted into the loop circuit. The 2 × 2 optical coupler of the loop circuit returns back a branched part of the downward optical signal (λ1+λ2+λSV) toward the upward direction, while it passes through the most part of the intensity of the downward optical signal (λ1+λ2+λSV). The λSV signal which passes through the optical BPF and the upward signal which is amplified by another AMP are multiplexed and transmitted to end terminal 1. Similarly, in REP 2 and REP 3, a part of the downward signal is branched and transmitted together with the upward main signal to end terminal 1.

End terminal 1 receives the upward main signal (λ1+λ2+ λSV) transmitted by the transmission unit of end terminal 2 with monitor signals (λ SV) returned back by REP 1,REP 2, and REP 3. These upward signals received by end terminal 1 are demultiplexed into λ1, λ2, λSV by OPT-DMUX and each of the decomposed signals is inputted into optical detectors OR 1, OR 2, and OR 3, respectively. The signals λ1 and λ2 are main signals, while the signal λSV is demodulated to obtain monitor signals returned back by REP 1,REP 2, and REP 3, for monitoring the transmission line including the repeaters. The obtained three monitor signals have time delay depending upon the distances they run between an end terminal and each repeater. A breakqown of the transmission line or a level down of repeater can be monitored by identifying the return back point by analyzing the time delay.

OPT-DMUX may be a Y demultiplexer or an arrayed wave-guide demultiplexer which branches the optical signal (λ1+λ2+λSV) into three beams. Each of the optical detector unit OR 1,OR 2, and OR-SV receives one of these signals respectivly by using a suitable band pass filter to demodulate the data transmitted by end terminal 2.

OR-SV which receives selectively the monitor wavelength λSV detects correctly the return back signal whose level is sufficiently high, when a pulsed optical signal with a longer period than, for example, twice the time of the transmission time between end terminal1 and end terminal 2, and if the monitor wavelength λ SV is not emitted from end terminal 2, during the time when it is emitted from end terminal 1. Thus, OR-SV can obtain the λSV signal pulses from the repeaters within the above period repeatedly, when the repeaters and optical fibers are under normal conditions.

When the downward 2 × 2 optical coupler in repeater REP 1 receives an input (λ1+λ2+λSV), the upward 2 × 2 optical coupler in REP 1 receives an input (λ1 + λ2). Further, all the optical BPF has the same characteristics for λ SV.

On the other hand, when the repeaters are not working normally, the return back signal from the abnormal repeater becomes small in its amplitude or delayed from the usual timing. Further, when one of the optical fibers is broken, the return signal from the repeater which is placed at the downstream of the optical fiber is drastically attenuated. Thus, the breakdown of AMPs, optical BPFs, and optical fibers can be diagnosed by the amplitude and spectrum of the return back signals.

In a second embodiment, the wavelengths for the downward direction are shifted from those for the upward direction in order to monitor more accurately the breakdown or malfunction of the repeaters or the transmission lines, although the wavelengths λ1, λ2 and λSV are commonly used for the downward and upward directions in the aforementioned first embodiment.

In the second embodiment, the wavelength of the optical sources OS 1,OS 2, and OS-SV in end terminal 1 and end terminal 2 are tuned by different sets of tunable lasers, so that every light source emits a different wavelength with each other. The filtering wavelength of each optical BPF is controlled by end terminals 1 and 2. The monitoring becomes possible at all times both at end ternimal land end terminal 2.

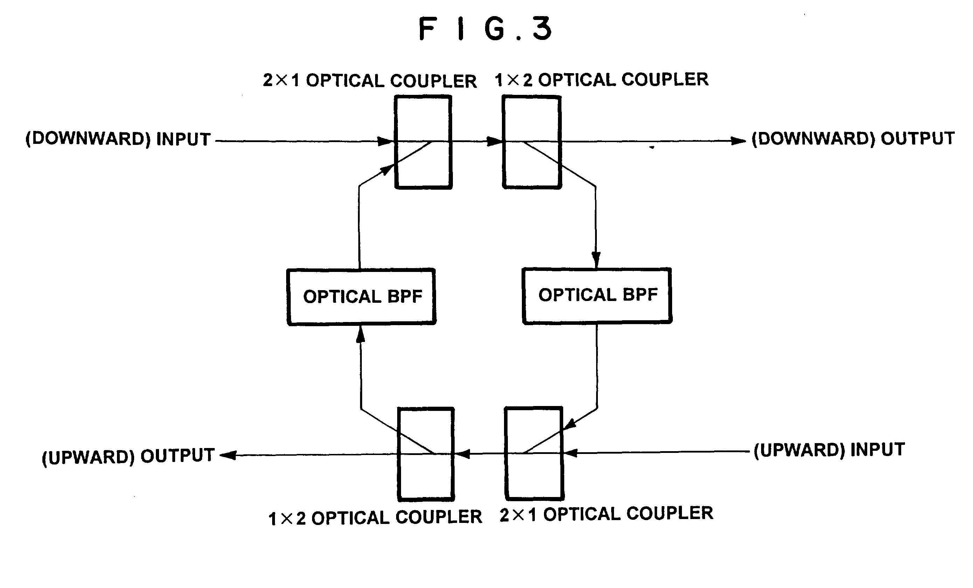

1 × 2 optical couplers as shown in Figure 3 are used in the optical loop circuit in the second embodiment, invention, although 2 × 2 optical couplers as shown in Figure 2 are used in the first embodiment. As shown in Figure 3, the output of a 2 × 1 optical coupler in the downward direction is connected with the input of an 1 × 2 optical coupler. Further, as shown in Figure 3, one of the output of the 1 × 2 optical coupler transmits a downward main signal, and another output of the 1 × 2 optical coupler is connected with an optical BPF which is connected with one of the input of a 2 × 1 optical coupler for the upward signal. The same will apply to the upward connection. These loop circuits are connected with AMPs similarly in Figure 1.

The degree of freedom of arrangement in the repeater is increased by using 2 × 1 optical couplers and 1 × 2 optical couplers.

Any breakdown or malfunction in the repeaters or transmission lines may also be analyzed by investigating the wavelength characteristics of the repeaters and transmission lines by scanning the wavelength all over the transmission range of the optical fibers.

Although the present invention has been shown and described with respect to the best embodiment thereof, it should be understood by those skilled in the art that the foregoing and various other changes, omissions, and additions in the form and detail thereof may be made therein without departing from the scope of the present invention.

Each feature disclosed in this specification (which term includes the claims) and/or shown in the drawings may be incorporated in the invention independently of other disclosed and/or illustrated features.

Statements in this specification of the "objects of the invention" relate to preferred embodiments of the invention, but not necessarily to all embodiments of the invention falling within the claims.

The description of the invention with reference to the drawings is by way of example only.

The text of the abstract filed herewith is repeated here as part of the specification.

A bi-directional system which reduces the number of wavelength for downward and upward signals and monitors any malfunction of repeaters accurately. The system of the present invention comprises end terminals for transmitting/receiving light signals, optical fibers for upward/downward transmission line which carry the light signal, and a plurality of optical repeaters which amplify directly the attenuated light signals. Here, each repeater comprises an optical amplifier for the transmission lines, an optical coupler for separating the output of the optical amplifier into two beams, and optical filter for extracting monitor wavelength to output it into the opposite direction. Any faulty repeater is detected by analyzing the amplitudes of the pulse train which returns back to an end terminal under the time delay depending upon the distance between the end terminal and each repeater.

## Claims

1. A monitoring system for monitoring a digital bi-directional communication line, which comprises end terminals for transmitting and receiving pulsed light signals, optical fibers for carrying said light signals in opposite directions and a plurality of optical repeaters which amplify directly light signals carried by said optical fibers, each repeater comprising a pair of optical amplifiers, a pair of optical couplers for separating the output of the optical amplifiers into two beams, and a pair of optical filters for extracting a monitor signal and outputting the monitor signal in the opposite transmission direction to which it was received by the repeater; and
means for analyzing the amplitudes of the pulses received at an end terminal with a time delay depending upon a distance between the end terminal and a repeater in order to detect a malfunction in the communication line.

2. A system according to Claim 1, wherein each optical coupler is a 2 x 2 arrayed wave-guide optical coupler.

3. A system according to Claim 1 or 2, wherein:
said monitor signal is a pulsed light signal which is transmitted at an interval which is longer than twice the time for said light signal to propagate from one end terminal to the other end terminal; and
said pulsed light signal from said one end terminal is transmitted at a timing different from that of pulsed light signal from said other end terminal.

4. A loop circuit comprising a first optical amplifier for amplifying a first signal, a first 2 x 2 optical coupler connected with the output of said first optical amplifier, a second optical amplifier for amplifying a second signal, a second 2 x 2 optical coupler connected with the output of said second optical amplifier, a first optical band pass filter (BPF) for extracting a first monitor signal from one of the outputs of the first 2 x 2 optical coupler, and a second optical BPF for extracting a second monitor signal from one of the outputs of said 2 x 2 optical coupler.

5. A loop circuit comprising a first 2 x 1 optical coupler for receiving a first signal, a first 1 x 2 optical coupler for receiving the first signal, a second 2 x 1 optical coupler for receiving a second signal, a second 1 x 2 optical coupler for receiving the second signal, a first optical band pass filter (BPF) for extracting the first monitor signal from one of the outputs of said first 1 x 2 optical coupler, a second optical (BPF) for extracting the second monitor signal from one of the outputs of the second 1 x 2 optical coupler, a first optical amplifier connected with the input of said first 2 x 1 optical coupler, and a second optical amplifier connected with the input of said second 2 x 1 optical coupler.

6. A bi-directional transmission line comprising at least one loop circuit according to Claim 4 or 5 and end terminals for transmitting and receiving said monitor signals such that said first and second monitor signals are input to said at least one loop circuit at a prescribed time interval.

7. A transmission line according to Claim 6, wherein:
said monitor signal is a pulsed light signal which is transmitted at an interval which is longer than twice the time for said light signal to propagate from one end terminal to the other end terminal; and
said pulsed light signal from said one end terminal is transmitted at a timing different from that of the other pulsed light signal from said other end terminal.
